# EUROPEAN PATENT SPECIFICATION

(11) **EP 1 241 189 B1**
(45) Date of publication and mention of the grant of the patent: **16.08.2006**
(21) Application number: 02005787.3
(22) Date of filing: 13.03.2002
(51) Int. Cl.: C08F 8/04, C08C 19/02

(54) **Process for producing a hydrogenated polymer**
Verfahren zur Herstellung von hydrierten Polymeren
Procédé de préparation de polymères hydrogénés

(30) Priority: 14.03.2001 JP 2001071530
(43) Date of publication of application: 18.09.2002
(73) Proprietor: KURARAY CO., LTD., Kurashiki-shi, Okayama 710-8622 (JP)
(72) Inventor: Iwasaki, Hideharu, Kurashiki-city, Okayama, 410-0825 (JP); Ohgi, Hiroyuki, Kurashiki-city, Okayama, 710-0801 (JP); Arimoto, Kikuo, Kurashiki-city, Okayama, 710-0801 (JP)
(74) Representative: Müller-Boré & Partner Patentanwälte

(56) References cited:
- EP-A- 0 319 967
- EP-A- 0 378 104
- EP-A- 0 814 098
- DE-A- 2 845 615
- DE-A- 3 046 251
- DE-A- 3 410 069
- US-A- 2 915 511
- US-A- 4 501 685
- US-A- 4 560 817
- US-A- 5 391 637
- US-A- 5 969 195

## Description

The present invention relates to a process for producing a hydrogenated polymer having hydroxy group and/or a functional group which is convertible into hydroxy group or convertible into hydroxymethyl group.

An olefinic polymer having at least one functional group and an olefinic carbon-carbon double bond, the example of which is polybutadienediol, has low properties such as heat resistance and weatherability. However, hydrogenation of such an olefinic polymer removes the unsaturation due to such an olefinic carbon-carbon double bond to improve above properties.

The hydrogenation of a polymer can be effected using various metal catalyst such as nickel catalyst, palladium catalyst, platinum catalyst, titanium catalyst and rhodium catalyst. Among the processes for the hydrogenation of a polymer, the process using a supported-type catalyst in which a metal catalyst is supported on a carrier is useful because the catalyst can be easily removed from the reaction mixture after the hydrogenation.

As a process for the hydrogenation of a polymer having an olefinic carbon-carbon double bond and hydroxy group in which a supported-type catalyst is used, followings are reported.
[1] United States Patent No. 3,994,868 (hereinafter abbreviated as "document 1") discloses a process in which a hydroxylated polybutadiene is hydrogenated with ruthenium on carbon or ruthenium on alumina.
[2] Japanese Patent Publication No. Sho 61-36002 (JP-B 86-36002) [hereinafter abbreviated as "document 2"] discloses a process in which a hydroxylated polybutadiene is hydrogenated with a metal catalyst such as ruthenium or palladium on a porous carbon support.
[3] United States Patent No. 5,378,767 (hereinafter abbreviated as "document 3") discloses a process in which a polybutadienediol of molecular weight of 2,000 is hydrogenated with a catalyst of palladium on α-alumina.

Document 1 discloses that ruthenium catalyst can produce a hydrogenated polymer at high hydrogenation ratio without the elimination of the terminal hydroxy group. However, the present inventors have found that a hydrogenation process using ruthenium on a carrier involves an elution of ruthenium which reduces the stability of the hydrogenated polymer. Document 1 also discloses, as "Comparative Examples", a process in which a hydroxylated polybutadiene is hydrogenated with other metal catalysts such as palladium on carbon, rhodium on carbon, osmium on carbon, platinum on carbon and nickel-kieselguhr. Document 1 shows that palladium on carbon and rhodium on carbon may cause the elimination of hydroxy group and that osmium on carbon, platinum on carbon and nickel-kieselguhr cannot achieve sufficient hydrogenation ratio.

Document 2 also discloses that ruthenium catalyst can produce a hydrogenated polymer at high hydrogenation ratio without the elimination of the terminal hydroxy group [see Examples 1 and 2]. However, an elution of ruthenium may be involved to reduce the stability of the hydrogenated polymer. On the other hand, palladium catalyst can achieve the high hydrogenation ratio of 93% but it causes the elimination of hydroxy group [see Example 3].

Document 3 stresses that the hydrogenation process disclosed can avoid the difficulties involved with the removal of metal catalyst residues from the hydrogenated polymer. Document 3 also says that the specific catalyst is selective towards the hydrogenation of hydroxylated polydienes such that very little of the hydroxy group is lost during the hydrogenation process. However, the present inventors have found that the elimination of the hydroxy group is inevitably involved when the method described in the document 3 is applied for the hydrogenation of polybutadienes having high molecular weight of 10,000 or more.

A functional group such as hydroxy group can give, to a polymer, various good properties such as hydrophilicity, print or paint adhesion properties, heat adhesion properties to other polymers and so on. Therefore a polymer having a functional group is useful, depending on its good properties, for a packaging material, a molding material or other kind of sheets, films, fibers or coatings, or a component of a polymer alloy or a polymer blend.

In case of a hydrogenation of a polymer having a functional group, it is preferred that the functional group is retained through the hydrogenation process.

On the other hand, high hydrogenation ratio is recommended for the hydrogenation of an olefinic polymer having a carbon-carbon double bond in order to well improve the heat resistance and weatherability of said olefinic polymer.

In case of the hydrogenation of an olefinic polymer having a functional group such as hydroxy group, an elution of a metal component of a catalyst during the hydrogenation process tends to reduce the stability of the hydrogenated polymer. This tendency becomes remarkable, if the olefinic polymer has hydroxy group or its analog such as epoxy group and derivatives of hydroxy group. In addition, this tendency becomes more remarkable, when the content of hydroxy group or its analog in the olefinic polymer grows in number. Therefore, it is safe to avoid a use of a ruthenium catalyst, which inevitably involves an elution of ruthenium, for the hydrogenation of an olefinic polymer having hydroxy group or its analog and an olefinic carbon-carbon double bond.

However, no process have found for the hydrogenation of an olefinic polymer having hydroxy group or its analog and an olefinic carbon-carbon double bond using a catalyst other than ruthenium catalyst in high hydrogenation ratio and without the elimination of hydroxy group or its analog.

Moreover, in view of industrial application, it is required to effect the hydrogenation efficiently. It is necessary to achieve not only a high hydrogenation ratio but also a sufficient hydrogenation rate.

The object of the present invention is to provide an industrially advantageous process for producing a hydrogenated polymer by the hydrogenation of an olefinic polymer having an olefinic carbon-carbon double bond and hydroxy group and/or an analog of hydroxy group with high retention of such a functional group, high hydrogenation ratio and good hydrogenation rate.

The present inventors have made intensive studies on the hydrogenation of an olefinic polymer having an olefinic carbon-carbon double bond and hydroxy group using a supported-type palladium catalyst or a supported-type platinum catalyst, which can avoid an elution of a metal component during hydrogenation. As a result, the present inventors have found that, when palladium on a basic activated carbon is used as a catalyst, the hydrogenation of an olefinic polymer having an olefinic carbon-carbon double bond and hydroxy group proceeds with less elimination of hydroxy group and no bad influence on the hydrogenation rate compared to the case in which conventional palladium catalyst is used as a catalyst. Moreover, the present inventors have found that platinum on a basic activated carbon can achieve the similar result. Thus, the present invention was made based on these findings and additional studies.

The present invention provide a process for producing a hydrogenated polymer in which a polymer having an olefinic carbon-carbon double bond and hydroxy group and/or a functional group which is convertible into hydroxy group or convertible into hydroxymethyl group is hydrogenated under the presence of palladium on a basic activated carbon and/or platinum on a basic activated carbon. Hereinafter, a "polymer having an olefinic carbon-carbon double bond and hydroxy group and/or a functional group which is convertible into hydroxy group or convertible into hydroxymethyl group" may be referred as a "unsaturated polymer".

The unsaturated polymer may contain hydroxy group and/or a functional group convertible into hydroxy group or convertible into hydroxymethyl group of preferably 1 to 500 mole %, more preferably 1 to 300 mole %, based on all the monomer units in the polymer.

A functional group convertible into hydroxy group can include, for example, epoxy group and a protected hydroxy group. While a functional group convertible into hydroxymethyl group can include, for example, a protected carboxyl group and a protected aldehyde group. Among them, epoxy group, a protected hydroxy group and a protected carboxyl group are preferable.

The protective groups for hydroxy group include, for example, alkyl groups such as methyl group, ethyl group and tert-butyl group; aralkyl groups such as benzyl group; aryl groups such as phenyl group; alkoxyalkyl groups such as methoxymethyl group and ethoxyethyl group; acyl groups such as acetyl group, propionyl group and benzoyl group; alkoxycarbonyl groups such as methoxycarbonyl group, ethoxycarbonyl group, tert-butoxycarbonyl group and benzyloxycarbonyl group; silyl groups such as trimethylsilyl group and tert-butyldimethylsilyl group. The protective groups for carboxyl group include, for example, alkyl groups such as methyl group and ethyl group. The protected aldehyde groups can include cyclic acetals having dioxyalkylene moiety such as methylene dioxy moiety and ethylenedioxy moiety.

The unsaturated polymer can include a lactone moiety, which is derived from carboxyl group and hydroxy group, and a cyclic hemiacetal moiety, which is derived from aldehyde group and hydroxy group. The protected hydroxy groups can include such lactone moiety and cyclic hemiacetal moiety.

Examples of a functional group convertible into hydroxy group can include epoxy group; acyloxy groups such as acetyloxy group and benzoyloxy group; alkoxy groups such as methoxy group, ethoxy group, propoxy group, tert-butoxy group, allyloxy group and benzyloxy group; alkoxycarbonyloxy groups or aryloxycarbonyloxy groups such as methoxycarbonyloxy group, ethoxycarbonyloxy group, tert-butoxycarbonyloxy group, phenyloxycarbonyloxy group and benzyloxycarbonyloxy group; alkoxyalkyleneoxy groups such as methoxymethyleneoxy group, methoxyethyleneoxy group and ethoxyethyleneoxy group; siloxy groups such as trimethylsiloxy group and tert-butyldimethylsiloxy group. Examples of a functional group convertible into hydroxymethyl group can include ester groups such as carboxymethyl group, carboxyethyl group and carboxybutyl group.

There is no particular restriction on the distribution of the hydroxy group and/or the functional group convertible into hydroxy group or convertible into hydroxymethyl group in the unsaturated polymer. The type of distribution can be regular, block-like, random or tapered-like. The distribution may be mixed type of two or more of the above type.

When the unsaturated polymer has a side chain, the hydroxy group and/or the functional group convertible into hydroxy group or convertible into hydroxymethyl group may locate at the main chain of the polymer, the side chain of the polymer or both of them. In addition, the hydroxy group and/or the functional group convertible into hydroxy group or convertible into hydroxymethyl group may locate at one end or both ends of the main chain of the unsaturated polymer.

The unsaturated polymer may contain an olefinic carbon-carbon double bond of preferably 1 to 500 mole %, more preferably 1 to 300 mole %, based on all the monomer units in the polymer. Each olefinic carbon-carbon double bond may be either of cis or trans form. There is no particular restriction on the distribution of the olefinic carbon-carbon double bond in the unsaturated polymer. The type of distribution can be regular, block-like, random or tapered-like. The distribution may be mixed type of two or more of the above type.

When the unsaturated polymer has a side chain, the olefinic carbon-carbon double bond may locate at the main chain of the polymer, the side chain of the polymer or both of them. In addition, the olefinic carbon-carbon double bond may locate at an end of the polymer.

The number average molecular weight of the unsaturated polymer can range preferably from 1,000 to 1,000,000.

The unsaturated polymer may be one produced by a known polymerization method such as a radical polymerization, an ionic polymerization, a coordination polymerization and a metathesis polymerization.

A polymer made of a conjugated diene or a copolymer of a conjugated diene and another type of monomer are preferred for the unsaturated polymer. A conjugated diene having hydroxy group and/or a functional group convertible into hydroxy group or convertible into hydroxymethyl group (i) and/or another type of monomer, which is copolymerizable with a conjugated diene, having hydroxy group and/or a functional group convertible into hydroxy group or convertible into hydroxymethyl group (ii) may be used for all or a part of the raw materials of the unsaturated polymer.

One or more types of monomer can be used as the conjugated diene, and one or more types of monomer can be used as the monomer which is copolymerizable with a conjugated diene.

Examples of the conjugated dienes can include linear conjugated dienes, which may have a substituent, such as 1,3-butadiene, isoprene, 1,3-pentadiene, 1,3-hexadiene and chloroprene; cyclic conjugated dienes such as cyclopentadiene, 1,3-cyclohexadiene, 1,3-cycloheptadiene and 1,3-cyclooctadiene. The conjugated dienes also include conjugated dienes having a hydroxy group and/or a functional group convertible into hydroxy group or convertible into hydroxymethyl group such as 1-acetyloxy-1,3-butadiene, 1-tert-butoxy-1,3-butadiene, 1-methoxycarbonyloxy-1,3-butadiene,1-trimethylsiloxy-1,3-butadiene, 2-acetyloxy-1,3-butadiene, 2-tert-butoxy-1,3-butadiene, 2-methoxycarbonyloxy-1,3-butadiene, 2-trimethylsiloxy-1,3-butadiene, 1-acetyloxy-2-methyl-1,3-butadiene, 1-tert-butoxy-2-methyl-1,3-butadiene, 1-methoxycarbonyloxy-2-methyl-1,3-butadiene, 1-trimethylsiloxy-2-methyl-1,3-butadiene, 1-acetyloxy-3-methyl-1,3-butadiene, 1-tert-butoxy-3-methyl-1,3-butadiene, 1-methoxycarbonyloxy-3-methyl-1,3-butadiene, 1-trimethylsiloxy-3-methyl-1,3-butadiene, 2-acetyloxy-3-methyl-1,3-butadiene, 2-tert-butoxy-3-methyl-1,3-butadiene, 1-methoxycarbonyloxy-3-methyl-1,3-butadiene and 2-trimethylsiloxy-3-methyl-1,3-butadiene.

Examples of the another type of monomer, which is copolymerizable with a conjugated diene, can include styrene, styrene derivatives, which may have a substituent, such as α-methylstyrene, ethylstyrene, chlorostyrene and bromostyrene; α-olefins such as ethylene, propylene, 1-butene, 2-butene, isobutene, 1-pentene, 2-pentene and 1-hexene; cycloolefins such as cyclohexene, cycloheptene and cyclooctene. The another type of monomer also includes ones having hydroxy group and/or a functional group convertible into hydroxy group or convertible into hydroxymethyl group such as acrylic acid or its esters; e.g. methyl acrylate, ethyl acrylate, propyl acrylate, butyl acrylate or glycidyl acrylate. It also includes methacrylic acid and its esters; e.g. methyl methacrylate, ethyl methacrylate, propyl methacrylate, butyl methacrylate or glycidyl methacrylate. It can also include acrylamide or its derivatives; methacrylamide or its derivatives; vinyl esters of vinyl acetate or vinyl propionate; vinyl ethers such as methy vinyl ether, ethyl vinyl ether, propyl vinyl ether, butyl vinyl ether, tert-butyl vinyl ether and trimethylsilyl vinyl ether; acrylonitrile; methacrylonitrile; acrolein; methacrolein; substituted styrenes such as hydroxystyrene, acetoxystyrene, t-butoxystyrene or trimethylsiloxystyrene; substituted α-olefins of 3-butene-1-ol, 1,2-diacetoxy-3-butene or 1,2-di(methoxycarbonyloxy)-3-butene; substituted cycloolefins of 4-cyclooctene-1-ol, 1-acetoxy-4-cyclooctene, 3-cyclooctene-1-ol, 1-acetoxy-3-cyclooctene, 5-cyclooctene-1,2-diol, 1,2-diacetoxy-5-cyclooctene, 1,2-di(methoxycarbonyloxy)-5-cyclooctene, 4-cyclooctene-1,2-diol, 1,2-diacetoxy-4-cyclooctene or 1,2-di(methoxycarbonyloxy)-4-cyclooctene.

The unsaturated polymer can also be obtained by the polymerization of a conjugated diene or a copolymerization of a conjugated diene and another type of monomer using a chemical reagent having hydroxy group and/or a functional group convertible into hydroxy group or convertible into hydroxymethyl group as a polymerization initiator and/or a polymerization terminator. In such a case, hydroxy group and/or a functional group convertible into hydroxy group or convertible into hydroxymethyl group locates at one end or both ends of the unsaturated polymer.

More specifically, the unsaturated polymer having hydroxy group and/or a functional group convertible into hydroxy group or convertible into hydroxymethyl group at one end or both ends of the polymer can be obtained by a radical polymerization using hydrogen peroxide as a polymerization initiator; a radical polymerization using an azobisisonitrile having hydroxy group and/or a functional group convertible into hydroxy group or convertible into hydroxymethyl group as a polymerization initiator; an ionic polymerization under the presence of an alkyleneoxide, styreneoxide, epichlorohydrin or polyethyleneglycol; an ionic polymerization using an alkyleneoxide, epichlorohydrin or polyethyleneglycol as a polymerization terminator; or an ionic polymerization using an alkyllithium having a functional group convertible into hydroxy group or convertible into hydroxymethyl group as a polymerization initiator.

A polymer made of an alkyne or a copolymer of an alkyne and another type of monomer are another preferred example of the unsaturated polymer. An alkyne having hydroxy group and/or a functional group convertible into hydroxy group or convertible into hydroxymethyl group (iii) and/or another type of monomer, which is copolymerizable with an alkyne, having hydroxy group and/or a functional group convertible into hydroxy group or convertible into hydroxymethyl group (iv) may be used for all or a part of the raw materials of the unsaturated polymer.

One or more types of monomer can be used as the alkyne, and one or more types of monomer can be used as the monomer which is copolymerizable with an alkyne.

Examples of the alkynes can include linear or cyclic alkynes such as acetylene, propyne, 1-butyne, 1-pentyne, 3-methyl-1-butyne, cyclopropylacetylene, 4-methyl-1-pentyne, 3,3-dimethyl-1-butyne, 2-butyne, 2-pentyne, 2-hexyne, 3-hexyne, 4-methyl-2-pentyne, 2-heptyne, cyclooctyne, phenylacetylene, diphenylacetylene, 1-phenyl-1-propyne, 1-phenyl-1-butyne and 1-phenyl-1-hexyne. The alkynes also include alkynes having hydroxy group and/or a functional group convertible into hydroxy group or convertible into hydroxymethyl group such as t-butoxyacetylene, acetoxyacetylene, 2-propyne-1-ol, 1-acetoxy-2-propyne, 1-tert-butoxy-2-propyne and 1-trimethylsiloxy-2-propyne.

Examples of the another type of monomer, which is copolymerizable with an alkyne, can include α-olefins such as ethylene, propylene, 1-butene, 2-butene, isobutene, 1-pentene, 2-pentene and 1-hexene; cycloolefins such as cyclohexene, cycloheptene and cyclooctene. The another type of monomer also includes ones having hydroxy group and/or a functional group convertible into hydroxy group or convertible into hydroxymethyl group such as substituted α-olefins of 3-butene-1-ol, 1,2-diacetoxy-3-butene or 1,2-di(methoxycarbonyloxy)-3-butene; substituted cycloolefins of 4-cyclooctene-1-ol, 1-acetoxy-4-cyclooctene, 3-cyclooctene-1-ol, 1-acetoxy-3-cyclooctene, 5-cyclooctene-1,2-diol, 1,2-diacetoxy-5-cyclooctene, 1,2-di(methoxycarbonyloxy)-5-cyclooctene, 4-cyclooctene-1,2-diol, 1,2-diacetoxy-4-cyclooctene or 1,2-di(methoxycarbonyloxy)-4-cyclooctene; vinyl esters of vinyl acetate, vinyl propionate or vinyl trifluoroacetate; vinyl ethers such as methy vinyl ether, ethyl vinyl ether, propyl vinyl ether, butyl vinyl ether, tert-butyl vinyl ether and trimethylsilyl vinyl ether.

The unsaturated polymer can also be obtained by the polymerization of an alkyne or a copolymerization of an alkynes and another type of monomer using a chemical reagent having hydroxy group and/or a functional group convertible into hydroxy group or convertible into hydroxymethyl group as a polymerization initiator and/or a polymerization terminator. In such a case, hydroxy group and/or a functional group convertible into hydroxy group or convertible into hydroxymethyl group locates at one end or both ends of the unsaturated polymer.

More specifically, the unsaturated polymer having acetoxy group at one end of the polymer can be obtained by a metathesis polymerization using 1-acetoxy-3-butene as a polymerization terminator. Also, the unsaturated polymer having acetoxy groups at both ends of the polymer can be obtained by a metathesis polymerization using 1,6-diacetoxy-3-hexene as a polymerization terminator.

A polymer made of an allene derivative or a copolymer of an allene derivative and another type of monomer are also another preferred example of the unsaturated polymer. An allene derivative having hydroxy group and/or a functional group convertible into hydroxy group or convertible into hydroxymethyl group (v) and/or another type of monomer, which is copolymerizable with an allene derivative, having hydroxy group and/or a functional group convertible into hydroxy group or convertible into hydroxymethyl group (vi) may be used for all or a part of the raw materials of the unsaturated polymer.

One or more types of monomer can be used as the allene derivative, and one or more types of monomer can be used as the monomer which is copolymerizable with an allene derivative.

Examples of the allene derivatives can include allenes such as allene; alkylallenes of methylallene or ethylallene; phenylallene and cyanoallene. The allene derivatives also include allenes having hydroxy group and/or a functional group convertible into hydroxy group or convertible into hydroxymethyl group such as acetoxyallene, t-butoxyallene, trimethylsiloxyallene, hydroxymethylallene, acetoxymethylallene, t-butoxymethylallene and trimethylsiloxymethylallene; allene carboxylic esters such as methyl 2,3-butadienoate and ethyl 2,3-butadienoate.

Examples of the another type of monomer, which is copolymerizable with an allene derivative, can include conjugated ene-yne-compounds such as 3-methyl-3-butene-1-yne; linear conjugated dienes, which may have a substituent, such as 1,3-butadiene, isoprene, 1,3-pentadiene, 1,3-hexadiene, 1,3-heptadiene and chloroprene; cyclic conjugated dienes such as cyclopentadiene, 1,3-cyclohexadiene, 1,3-cycloheptadiene and 1,3-cyclooctadiene; isonitriles such as 1-phenylethylisonitrile. The another type of monomer also includes ones having hydroxy group and/or a functional group convertible into hydroxy group or convertible into hydroxymethyl group such as substituted conjugated dienes of 1-acetoxyl-1,3-butadiene, 1-tert-butoxy-1,3-butadiene, 1-methoxycarbonyloxy-1,3-butadiene, 1-trimethylsiloxy-1,3-butadiene, 2-acetoxyl-1,3-butadiene,2-tert-butoxy-1,3-butadiene, 2-methoxycarbonyloxy-1,3-butadiene, 2-trimethylsiloxy-1,3-butadiene, 1-acetyloxyl-2-methyl-1,3-butadiene, 1-tert-butoxy-2-methyl-1,3-butadiene, 1-methoxycarbonyloxy-2-methyl-1,3-butadiene, 1-trimethylsiloxy-2-methyl-1,3-butadiene, 1-acetyloxyl-3-methyl-1,3-butadiene, 1-tert-butoxy-3-methyl-1,3-butadiene, 1-methoxycarbonyloxy-3-methyl-1,3-butadiene, 1-trimethylsiloxy-3-methyl-1,3-butadiene, 2-acetyloxyl-3-methyl-1,3-butadiene, 2-tert-butoxy-3-methyl-1,3-butadiene, 2-methoxycarbonyloxy-3-methyl-1,3-butadiene or 2-trimethylsiloxy-3-methyl-1,3-butadiene.

The unsaturated polymer can also be obtained by the polymerization of an allene derivative or a copolymerization of an allene derivative and another type of monomer using a chemical reagent having hydroxy group and/or a functional group convertible into hydroxy group or convertible into hydroxymethyl group as a polymerization initiator and/or a polymerization terminator. In such a case, hydroxy group and/or a functional group convertible into hydroxy group or convertible into hydroxymethyl group locates at one end or both ends of the unsaturated polymer.

More specifically, the unsaturated polymer having hydroxy group or a functional group convertible into hydroxy group or convertible into hydroxymethyl group at one end of the polymer can be obtained by a coordination polymerization under the presence of an equimolar amount, based on the polymerization catalyst, of an allene derivative having hydroxy group and/or a functional group convertible into hydroxy group or convertible into hydroxymethyl group at the start of the polymerization; or a polymerization using an allene derivative having hydroxy group and/or a functional group convertible into hydroxy group or convertible into hydroxymethyl group as a polymerization terminator. The unsaturated polymer having hydroxy group and/or a functional group convertible into hydroxy group or convertible into hydroxymethyl group at both ends of the polymer can be obtained by a polymerization in which above described method is combined.

Another preferred example of the unsaturated polymer is a polymer obtained by a ring-opening metathesis polymerization (ROMP) of a cyclic olefin. A cyclic olefin having hydroxy group and/or a functional group convertible into hydroxy group or convertible into hydroxymethyl group (vii) may be used for all or a part of the raw materials of the unsaturated polymer.

One or more types of monomer can be used as the cyclic olefin, and one or more types of monomer can be used as the monomer which is copolymerizable with a cyclic olefin.

The cyclic olefins can include, for example, cyclobutene, cyclopentene, 3-methyl-1-cyclopentene, 4-methyl-1-cyclopentene, cyclopentadiene, cycloheptene, cyclooctene, 1,3-cyclooctadiene, 1,4-cyclooctadiene, 1,5-cyclooctadiene, 1,3,5-cyclooctatriene, 1,3,6-cycloctatriene, 1,3,5,7-cyclooctatetraene, 1-methyl-1,5-cyclooctadiene, 1,5-dimethyl-1,5-cyclooctadiene, 1,6-dimethyl-1,5-cyclooctadiene, norbornens which may have a substituent, norbornadienes which may have a substituent.

The cyclic olefins also include ones having hydroxy group and/or a functional group convertible into hydroxy group or convertible into hydroxymethyl group such as 2-cyclopentene-1-ol, 3-cyclopentene-1-ol, 3-cyclopentene-1,2-diol, 1-acetoxy-2-cyclopentene, 1-acetoxy-3-cyclopentene, 1,2-diacetoxy-3-cyclopentene, 1-tert-butoxy-2-cyclopentene, 1-tert-butoxy-3-cyclopentene, 1,2-di-tert-butoxy-3-cyclopentene, 1-trimethylsiloxy-2-cyclopentene, 1-trimethylsiloxy-3-cyclopentene, 1,2-di(trimethylsiloxy)-3-cyclopentene, 4-cyclooctene-1-ol, 1-acetoxy-4-cyclooctene, 1-tert-butoxy-4-cyclooctene, 1-trimethylsiloxy-4-cyclooctene, 4-cyclooctene-1,2-diol, 1,2-diacetoxy-4-cyclooctene, 1,2-di-tert-butoxy-4-cyclooctene, 1,2-di(trimethylsiloxy)-4-cyclooctene, 1,2-di(methoxycarbonyloxy)-4-cyclooctene, 5-cyclooctene-1,2-diol, 1,2-diacetoxy-5-cyclooctene, 1,2-di-tert-butoxy-5-cyclooctene, 1,2-di(trimethylsiloxy)-5-cyclooctene, 1,2-di(methoxycarbonyloxy)-5-cyclooctene, 1,3,5,7-tetra(hydroxymethyl)-1,3,5,7-cyclooctatetraene, 1,3,5,7-tetra(acetoxymethyl)-1,3,5,7-cyclooctatetraene, 1,2,5,6-tetra(hydroxymethyl)-1,3,5,7-cyclooctatetraene or 1,2,5,6-tetra(acetoxymethyl)-1,3,5,7-cyclooctatetraene.

In addition, a cyclic ether can be copolymerized with the cyclic olefins. Examples of the cyclic ethers include tetrahydrofuran, 2-methyltetrahydrofurane and 1,4-dioxane.

The unsaturated polymer can also be obtained by the ring-opening metathesis polymerization of a cyclic olefin using a chemical reagent having hydroxy group and/or a functional group convertible into hydroxy group or convertible into hydroxymethyl group as a polymerization initiator and/or a polymerization terminator. In such a case, hydroxy group and/or a functional group convertible into hydroxy group or convertible into hydroxymethyl group locates at one end or both ends of the unsaturated polymer.

More specifically, the unsaturated polymer having hydroxy group at one end of the polymer can be obtained by a ring-opening metathesis polymerization of a cyclic olefin using 3-butene-1-ol as a polymerization terminator. Also, the unsaturated polymer having hydroxy groups at both ends of the polymer can be obtained by a ring-opening metathesis polymerization of a cyclic olefin using 3-hexene-1,6-diol as a polymerization terminator. Similarly, the unsaturated polymer having acetoxy group at one end of the polymer can be obtained by a ring-opening metathesis polymerization of a cyclic olefin using 1-acetoxy-3-butene as a polymerization terminator. In addition, the unsaturated polymer having acetoxy groups at both ends of the polymer can be obtained by a ring-opening metathesis polymerization of a cyclic olefin using 1,6-diacetoxy-3-hexene as a polymerization terminator.

A polymer obtained by a metathesis polymerization of an acyclic diene, which is so called ADMET (acyclic diene metathesis), is also one of a preferred example of the unsaturated polymer. An acyclic diene having hydroxy group and/or a functional group convertible into hydroxy group or convertible into hydroxymethyl group (viii) may be used for all or a part of the raw materials of the unsaturated polymer.

One or more types of monomer can be used as the acyclic diene, and one or more types of monomer can be used as the monomer which is copolymerizable with an acyclic diene.

The acyclic dienes can include, for example, 1,5-hexadiene, 1,6-heptadiene and 1,7-octadiene. The acyclic dienes also include ones having hydroxy group and/or a functional group convertible into hydroxy group or convertible into hydroxymethyl group such as 1,6-heptadiene-4-ol, 4-acetoxy-1,6-heptadiene, 4-tert-butoxy-1,6-heptadiene, 4-trimethylsiloxy-1,6-heptadiene, 1,7-octadiene-4-ol, 4-acetoxy-1,7-octadiene, 4-tert-butoxy-1,7-octadiene and 4-trimethylsiloxy-1,7-octadiene.

The unsaturated polymer can also be obtained by the metathesis polymerization of an acyclic diene using a chemical reagent having hydroxy group and/or a functional group convertible into hydroxy group or convertible into hydroxymethyl group as a polymerization initiator and/or a polymerization terminator. In such a case, hydroxy group and/or a functional group convertible into hydroxy group or convertible into hydroxymethyl group locates at one end or both ends of the unsaturated polymer.

More specifically, the unsaturated polymer having hydroxy group at one end of the polymer can be obtained by a metathesis polymerization of an acyclic diene using 3-butene-1-ol as a polymerization terminator. Also, the unsaturated polymer having hydroxy groups at both ends of the polymer can be obtained by a metathesis polymerization of an acyclic diene using 3-hexene-1,6-diol as a polymerization terminator. Similarly, the unsaturated polymer having acetoxy group at one end of the polymer can be obtained by a metathesis polymerization of an acyclic diene using 1-acetoxy-3-butene as a polymerization terminator. In addition, the unsaturated polymer having acetoxy groups at both ends of the polymer can be obtained by a metathesis polymerization of an acyclic diene using 1,6-diacetoxy-3-hexene as a polymerization terminator.

According to the present invention, hydrogenation of the unsaturated polymer requires palladium on a basic activated carbon or platinum on a basic activated carbon.

When palladium or platinum is supported on an acidic or a neutral activated carbon, its catalytic activities for the hydrogenation and the hydrogenolysis are both improved. Therefore, palladium or platinum on an acidic or a neutral activated carbon tends to cause the elimination of the functional group of the unsaturated polymer, such as hydroxy group and a functional group which is convertible into hydroxy group or convertible into hydroxymethyl group, through the hydrogenation process. Commercially available palladium on carbon or platinum on carbon is a palladium catalyst or a platinum catalyst which is supported on an acidic or a neutral activated carbon.

The basic activated carbon can be prepared by a conventional method such as (i) a process comprising making an activated carbon immersed in an aqueous solution of a basic alkaline metal salt such as sodium hydroxide, potassium hydroxide, sodium carbonate and potassium carbonate to neutralize the acidic functionalities present on the surface of the activated carbon and to deposit the alkaline metal salt on the surface of the activated carbon or (ii) a chemical activation; e.g. an alkali activation [see pages 66-69 of "Activated Carbon - basis and application- (New Edition)" published on 1997 by KODANSHA Co., Ltd., edited by Y. Sanada, M. Suzuki and K. Fujimoto].

The BET surface area of the basic activated carbon ranges preferably from 200 to 4000 m²/g, more preferably from 400 to 3500 m²/g.

The basic activated carbon may be one obtained from a material such as a coconut shell, a synthetic resin, a petroleum pitch and/or a coal pitch. The basic activated carbon can be in a form of a powder, a granule, a fiber or a molded article.

Deposition of palladium or platinum on a basic activated carbon can be made by conventional methods [see, for example, pages 39-83 of "Shokubai-koza Vol. 5; Kougakuhen I; Syokubaisekkei" edited by Catalysis Society of Japan, published on 1985]. More specifically, palladium on a basic activated carbon can be prepared, for example, by successive steps of immersing a basic activated carbon, which may be treated with an aqueous ammonia, into an aqueous palladium nitrate, removing excessive amount of palladium nitrate from the surface of the basic activated carbon by washing with water, drying the basic activated carbon having palladium nitrate deposited on its surface, and converting the palladium nitrate deposited into palladium metal by hydrogenation. Amount of the palladium or the platinum deposited is preferably between 0.01 and 35 parts by weight based on 100 parts by weight of the basic activated carbon. The amount is, from the viewpoint of the cost for the production of the supported-type catalyst and the stability of the catalyst, more preferably between 0.1 and 15 parts by weight, still more preferably between 0.2 and 10 parts by weight, based on 100 parts by weight of the basic activated carbon.

The palladium on a basic activated carbon or the platinum on a basic activated carbon, which is the hydrogenation catalyst, is used in an amount of preferably from 0.001 to 20 parts by weight based on 100 parts by weight of the unsaturated polymer. From the viewpoint of reaction rate and reaction efficiency, the palladium on a basic activated carbon or the platinum on a basic activated carbon is used in an amount of more preferably from 0.01 to 15 parts by weight, still more preferably from 0.02 to 10 parts by weight based on 100 parts by weight of the unsaturated polymer.

The hydrogenation of the unsaturated polymer proceeds preferably under the presence of an appropriate solvent. Examples of the solvent include aliphatic hydrocarbons such as pentane, hexane, octane, decane, cyclohexane, methylcyclohexane and cyclooctane; aromatic hydrocarbons such as benzene, toluene, xylene and mesitylene; alcohols such as methanol, ethanol, isopropanol, n-butanol, t-butanol and octanol; ethers such as diethyl ether, dipropyl ether, di(ethyleneglycol) dimethyl ether, tetrahydrofuran and dioxane. These solvents can be used singly or in combination.

There is no particular limitation on the amount of the solvent. However, from the viewpoint of processability, safety, efficiency and the cost for the hydrogenation process, the solvent is used preferably from 2 to 1000 times by weight, more preferably from 3 to 100 times by weight, based on the unsaturated polymer.

The hydrogenation of the unsaturated polymer can proceed preferably under the presence of a basic substance. The basic substance includes, for example, salts of an organic acid such as sodium acetate, potassium acetate, calcium acetate, magnesium acetate, sodium propionate, potassium propionate, calcium propionate, magnesium propionate, sodium butanoate, potassium butanoate, calcium butanoate, magnesium butanoate, sodium adipate, potassium adipate, calcium adipate, magnesium adipate, sodium benzoate, potassium benzoate, calcium benzoate, magnesium benzoate, sodium phthalate, potassium phthalate, calcium phthalate and magnesium phthalate; organic bases such as triethylamine, tripropylamine, tributylamine, trioctylamine, triethanolamine, N-methylpyrrolidine, N-methylpiperidine, N,N-dimethylaniline and pyridine.

The amount of the basic substance is preferably between 0.001 and 100 moles based on 1 mole atom of palladium or platinum. From the viewpoint of processability, reaction efficiency and the cost for the hydrogenation process, the basic substance is used in an amount of more preferably from 0.01 to 80 moles, still more preferably from 0.1 to 20 moles, based on 1 mole atom of palladium or platinum.

The hydrogenation of the unsaturated polymer proceeds preferably at a hydrogen pressure of 0.1 to 5MPa, more preferably at a hydrogen pressure of not more than 3MPa. Also, the hydrogenation of the unsaturated polymer proceeds at a temperature of preferably 40 to 140 °C, more preferably 60 to 120 °C.

The hydrogenation ratio of the unsaturated polymer can be adjusted depending on the properties required for the hydrogenated polymer. In general, the hydrogenation ratio is set preferably between 90 to 100 mole %, more preferably between 95 to 100 mole %. The hydrogenation ratio is defined as a molar ratio of the olefinic carbon-carbon double bond which is hydrogenated based on the total moles of the olefinic carbon-carbon double bond of the starting unsaturated polymer. The hydrogenation ratio can be determined by a conventional method such as ¹H-NMR analysis.

According to the present invention, the hydrogenation of the unsaturated polymer proceeds with substantially no elimination of hydroxy group and/or a functional group which is convertible into hydroxy group or convertible into hydroxymethyl group, even if the hydrogenation ratio is set as high as above described. Generally, 95 % or more of the hydroxy group and/or the functional group which is convertible into hydroxy group or convertible into hydroxymethyl group of the starting unsaturated polymer is retained. In addition, 98 % or more of such a functional group of the starting unsaturated polymer can be retained by the proper selection of the reaction condition for the hydrogenation. The retention of a functional group can be detected by a conventional method such as ¹H-NMR analysis.

The hydroxy group and/or a functional group which is convertible into hydroxy group or convertible into hydroxymethyl group of the unsaturated polymer is generally retained as it is through the hydrogenation process. However, the hydroxy group and/or the functional group which is convertible into hydroxy group or convertible into hydroxymethyl group of the unsaturated polymer may be converted, depending on the reaction condition, into other functional group through the hydrogenation process. For example, epoxy group may be converted into hydroxy group. An ester group may be converted into hydroxymethyl group. An alkoxy group such as benzyloxy group may be converted into hydroxy group. In addition, the functional group which is convertible into hydroxy group or convertible into hydroxymethyl group of the unsaturated polymer may be solvolyzed through the hydrogenation process. For example, an acyloxy group or a silyloxy group may be converted into hydroxy group.

According to the present invention, the functional group thus converted is estimated as "retained" functional group.

The process of the present invention can be effected, for example, by the procedures comprising (a) charging a unsaturated polymer and a solvent into a pressure-proof reaction vessel, (b) dissolving the unsaturated polymer into the solvent, (c) adding a catalyst and, if required, a basic substance to the obtained solution, (d) replacing the atmosphere of the reaction vessel with nitrogen and hydrogen, successively, and (e) keeping the reaction mixture at a given temperature under a given hydrogen pressure.

The hydrogenated polymer can be isolated from the reaction mixture by a conventional work up procedure such as reprecipitation, removal of solvent by heat, removal of solvent under reduced pressure and removal of solvent with water, that is so-called "steam stripping".

The hydrogenated polymer may be subjected to further modification, if required. The modification may involve the conversion of the hydroxy group and/or the functional group which is convertible into hydroxy group or convertible into hydroxymethyl group of said hydrogenated polymer by a conventional method such as deprotection of a protective group from a protected hydroxy group, a protected carboxyl group or a protected aldehyde group.

### Examples

Now, the invention is described in more detail hereinbelow with reference to the following Examples and Comparative Examples.

### Referential Example 1 [Preparation of palladium on a basic activated carbon]

100g of 5% aqueous potassium hydroxide was added to 100 g of coconut shell of 3mm of mean particle size, which had been carbonized at 500 °C, under nitrogen. The obtained mixture was heated with an oil bath for 6 hours under nitrogen to remove water, and further heated at 200 °C for 3 hours under nitrogen to give 103 g of carbonized product onto which potassium hydroxide was deposited. The obtained carbonized product was activated, with an oven, by elevating its temperature from room temperature to 900 °C at a speed of 200 °C per 1 hour and by heating at 900 °C for 1 hour under a flow of combustion gas having a rate of 100 ml per minute. After cooled to room temperature under nitrogen, the product was taken out from the oven, washed with 10 liters of water and dried at 200 °C for 8 hours to give 52g of basic activated carbon having basic surface and BET surface area of 600 m²/g.

100 g of 5% aqueous ammonia was added to 50g of the basic activated carbon obtained above, and the obtained mixture was stirred at room temperature for 12 hours. The activated carbon was collected by filtration and washed with 2 liters of water. 100 ml of water and 5 g of palladium nitrate was added successively to the washed activated carbon. The resulting mixture was stirred at room temperature for 3 hours. The activated carbon was collected by filtration, washed with 3 liters of water and dried at 200 °C for 8 hours to give 55 g of basic activated carbon onto the surface of which palladium nitrate was deposited. An autoclave of an inner volume of 1 liter was charged with 55 g of the basic activated carbon obtained above, onto which palladium nitrate was deposited, and 500 ml of isopropanol. The atmosphere of the autoclave was replaced by hydrogen. The palladium nitrate deposited on the basic activated carbon was converted into palladium metal by reduction at 140 °C for 8 hours under the flow of hydrogen of a rate of 100 ml per hour and of a pressure of 2 MPa. After cooled to room temperature, the atmosphere of the autoclave was replaced by nitrogen and 200 ml of water was added to the autoclave. The basic activated carbon was collected by filtration and washed with 5 liters of water to give 94 g of palladium catalyst, the water content of which was 50% by weight. The obtained palladium catalyst was palladium on basic activated carbon. The catalyst contained 4.8 weight % of palladium.

### Referential Example 2 [Preparation of polybutadiene having a hydroxy group at one polymer end]

An autoclave of an inner volume of 1 liter, equipped with a stirrer and a thermometer, was charged with 330g cyclohexane. After the atmosphere of the autoclave was replaced with nitrogen, the autoclave was charged with 12g of a solution of sec-buthyllithium in hexane at a concentration of 10.5 % by weight. The temperature was raised to 50 °C, and the autoclave was charged with 85.5 g of 1,3-butadiene over 1 hour to effect polymerization at 50 °C. The obtained reaction mixture was agitated at 50 °C for 1 hour, and the polymerization was terminated by adding 1g of ethylene oxide to the reaction mixture. After cooled to room temperature, 0.6 g of methanol, 0.3 g of acetic acid and 100g of water were added successively to the resulting reaction mixture. After stood still, the organic layer was collected and washed with water. Removal of solvent from the washed organic layer gave 82.2 g of polybutadiene with number average molecular weight of 4,000 having a hydroxy group at one polymer end.

### Example 1

An autoclave of an inner volume of 1 liter, equipped with a stirrer, a thermometer and a port for hydrogen, was charged with a solution of 20g of polybutadiene having a hydroxy group at one polymer end, which was obtained in the above Referential Example 2, in 220g of toluene and 0.1g of the palladium catalyst obtained in the above Referential Example 1, successively, under nitrogen. After the atmosphere of the autoclave was replaced with hydrogen, the temperature of the obtained mixture was raised to 100°C. Hydrogenation of polybutadiene was conducted at 100 °C for 5 hours under the constant hydrogen pressure of 2 Mpa (gauge pressure), which was kept by continuous supply of hydrogen. After cooled to room temperature, the atmosphere of the autoclave was replaced with nitrogen of atmospheric pressure and the palladium catalyst was filtered off. The filtrate was poured into 2 liters of methanol to precipitate 18.9 g of hydrogenated polybutadiene. Analysis of the product with 500 MHz ¹H-NMR, measured in CDCl₃ at 30 °C, showed that the conversion of olefinic carbon-carbon double bonds was not less than 99% and that 95 mole % of the hydroxy group was retained.

### Comparative Example 1

Procedures of Example 1 were repeated except that 0.1 g of commercially available palladium on carbon [5% Pd E106NN/W ; trade name, made by Degussa Japan co., Ltd.] was used instead of 0.1g of the palladium catalyst obtained in the above Referential Example 1. 18.4 g of hydrogenated polybutadiene was obtained from 20 g of polybutadiene having a hydroxy group at one polymer end obtained in the above Referential Example 2. Analysis of the product by 500 MHz ¹H-NMR showed that the conversion of olefinic carbon-carbon double bonds was 82% and that 81 mole % of the hydroxy group was retained.

### Comparative Example 2

Procedures of Example 1 were repeated except that 0.1g of commercially available Raney nickel [B111w; trade name, made by Degussa Japan Co.,Ltd.] was used instead of 0.1g of the palladium catalyst obtained in the above Referential Example 1. 17.4g of hydrogenated polybutadiene was obtained from 20g of polybutadiene having a hydroxy group at one polymer end obtained in the above Referential Example 2. Analysis of the product by 500 MHz ¹H-NMR showed that the conversion of olefinic carbon-carbon double bonds was 52% and that 84 mole % of the hydroxy group was retained.

### Example 2

Procedures of Example 1 were repeated except that the pressure of hydrogenation was changed to 1.5 MPa. 18.4 g of hydrogenated polybutadiene was obtained from 20g of polybutadiene having a hydroxy group at one polymer end obtained in the above Referential Example 2. Analysis of the product by 500 MHz ¹H-NMR showed that the conversion of olefinic carbon-carbon double bonds was not less than 99% and that not less than 97 mole % of the hydroxy group was retained.

### Comparative Example 3

Procedures of Comparative Example 1 were repeated except that the pressure of hydrogenation was changed to 1.5 MPa. 18.3 g of hydrogenated polybutadiene was obtained from 20 g of polybutadiene having a hydroxy group at one polymer end obtained in the above Referential Example 2. Analysis of the product by 500 MHz ¹H-NMR showed that the conversion of olefinic carbon-carbon double bonds was 78% and that 82 mole % of the hydroxy group was retained.

### Example 3

Procedures of Example 1 were repeated except that 20 g of hydroxy terminated 1,2-polybutadiene with number average molecular weight of 1,500 having hydroxy groups at both polymer ends [NISSO-PB G-1000; trade name, made by Nippon Soda Co., Ltd.] was used instead of 20g of polybutadiene having a hydroxy group at one polymer end. 18 g of hydrogenated 1,2-polybutadiene was obtained. Analysis of the product by 500 MHz ¹H-NMR showed that the conversion of olefinic carbon-carbon double bonds was not less than 99% and that not less than 97 mole % of the hydroxy group was retained.

### Comparative Example 4

Procedures of Example 3 were repeated except that 0.1 g of commercially available palladium on carbon [5%Pd E106NN/w; trade name, made by Degussa Japan Co., Ltd.] was used instead of 0.1g of the palladium catalyst obtained in the above Referential Example 1. 17.8 g of hydrogenated 1,2-polybutadiene was obtained from 20 g of hydroxy terminated 1,2-polybutadiene [NISSO-PB G-1000]. Analysis of the product by 500 MHz ¹H-NMR showed that the conversion of olefinic carbon-carbon double bonds was 67% and that 77 mole % of the hydroxy group was retained.

### Example 4

An autoclave of an inner volume of 300 ml, equipped with a stirrer, a thermometer and a port for hydrogen, was charged with a solution of 4g of poly(5-cyclooctene-1,2-diol) with number average molecular weight (Mn) of 40,000 and weight average molecular weight (Mw) of 120,000, which was prepared according to the method described in the "Example 1" of the United States Patent No. 6,153,714, in the mixture of 70 g of tetrahydrofuran and 60 g of methanol, and 40 mg of the palladium catalyst obtained in the above Referential Example 1, successively, under nitrogen. After the atmosphere of the autoclave was replaced with hydrogen by 3 times, the temperature of the obtained mixture was raised from room temperature to 100 °C gradually over 30 minutes, with stirring under the hydrogen pressure of 4 Mpa (gauge pressure). Hydrogenation of poly(5-cyclooctene-1,2-diol) was conducted at 100 °C for 4 hours under the constant hydrogen pressure of 4 Mpa (gauge pressure), which was kept by continuous supply of hydrogen. After cooled to room temperature, the reaction mixture was taken out from the autoclave. The reaction mixture was filtered to remove the palladium catalyst and poured into 300 ml of methanol to precipitate 3.9 g of hydrogenated polymer. Analysis of the product with 500 MHz ¹H-NMR, measured in DMSO-d6 at 85 °C, showed that the conversion of olefinic carbon-carbon double bonds was not less than 99 % and that 95 mole % of the hydroxy group was retained.

## Claims

1. A method for producing a hydrogenated polymer comprising subjecting a polymer having an olefinic carbon-carbon double bond and hydroxy group and/or a functional group which is convertible into hydroxy group or convertible into hydroxymethyl group to hydrogenation under the presence of palladium on a basic activated carbon and/or platinum on a basic activated carbon.

2. The method according to Claim 1, wherein said functional group which is convertible into hydroxy group or convertible into hydroxymethyl group is at least one selected from the group consisting of epoxy group, a protected hydroxy group, a protected carboxyl group and a protected aldehyde group.

3. The method according to Claim 1 or 2, wherein said functional group which is convertible into hydroxy group or convertible into hydroxymethyl group is at least one selected from the group consisting of epoxy group, an ester group, an acyloxy group, an alkoxy group, an alkoxycarbonyloxy group, an aryloxycarbonyloxy group, an alkoxyalkyleneoxy group and siloxy group.

## Patentansprüche

1. Verfahren zur Herstellung eines hydrierten Polymers, umfassend das Unterwerfen eines Polymers mit einer olefinischen Kohlenstoff-Kohlenstoff-Doppelbindung und einer Hydroxygruppe und/oder einer funktionellen Gruppe, welche in eine Hydroxygruppe umwandelbar ist oder in eine Hydroxymethylgruppe umwandelbar ist, einer Hydrierung in der Gegenwart von Palladium auf einem basisch aktivierten Kohlenstoff und/oder Platin auf einem basisch aktivierten Kohlenstoff.

2. Verfahren gemäß Anspruch 1, wobei die funktionelle Gruppe, welche in eine Hydroxygruppe umwandelbar ist oder in eine Hydroxymethylgruppe umwandelbar ist, mindestens eine ist, ausgewählt aus der Gruppe, bestehend aus einer Epoxygruppe, einer geschützten Hydroxygruppe, einer geschützten Carboxylgruppe und einer geschützten Aldehydgruppe.

3. Verfahren gemäß Anspruch 1 oder 2, wobei die funktionelle Gruppe, welche in eine Hydroxygruppe umwandelbar ist oder in eine Hydroxymethylgruppe umwandelbar ist, mindestens eine ist, ausgewählt aus der Gruppe, bestehend aus einer Epoxygruppe, einer Estergruppe, einer Acyloxygruppe, einer Alkoxygruppe, einer Alkoxycarbonyloxygruppe, einer Aryloxycarbonyloxygruppe, einer Alkoxyalkylenoxygruppe und einer Siloxygruppe.

## Revendications

1. Procédé pour produire un polymère hydrogéné, consistant à soumettre à une hydrogénation un polymère ayant une double liaison oléfinique carbone-carbone et un groupement hydroxy et/ou un groupement fonctionnel, qui est convertible en groupement hydroxy ou convertible en groupement hydroxyméthyle, en présence de palladium sur un carbone basique activé et/ou de platine sur un carbone basique activé.

2. Procédé selon la revendication 1, dans lequel ledit groupement fonctionnel, qui est convertible en groupement hydroxy ou convertible en groupement hydroxyméthyle, est au moins un groupement choisi dans le groupe constitué d'un groupement époxy, d'un groupement hydroxy protégé, d'un groupement carboxyle protégé et d'un groupement aldéhyde protégé.

3. Procédé selon la revendication 1 ou 2, dans lequel ledit groupement fonctionnel, qui est convertible en groupement hydroxy ou convertible en groupement hydroxyméthyle, est au moins un groupement choisi dans le groupe constitué d'un groupement époxy, d'un groupement ester, d'un groupement acyloxy, d'un groupement alcoxy, d'un groupement alcoxycarbonyloxy, d'un groupement aryloxycarbonyloxy, d'un groupement alcoxyalkylèneoxy et d'un groupement siloxy.
